# EUROPÄISCHE PATENTANMELDUNG

(11) **EP 1 162 556 A2**
(43) Veröffentlichungstag der Anmeldung: **12.12.2001**
(21) Anmeldenummer: 00116132.2
(22) Anmeldetag: 31.07.2000
(51) Int. Cl.: G06F 17/60

(54) **Verfahren zur computergestützen Vermittlung einer Kaufanfrage eines Kaufinteressenten an einen Anbieter**

(30) Priorität: 06.06.2000 DE 10027910
(71) Anmelder: Müske, Heiner, Dr., 40885 Ratingen (DE)
(72) Erfinder: Müske, Heiner, Dr., 40885 Ratingen (DE)
(74) Vertreter: Cohausz & Florack

(57) **Zusammenfassung**

Die Erfindung betrifft ein Verfahren zur computergestützten Vermittlung einer Kaufanfrage eines Kaufinteressenten an einen Anbieter,
a) bei dem von einer Mehrzahl von Anbietern eine Ware angeboten wird, deren Preis von der Entfernung zwischen der Lieferbasis und dem Lieferort und von der Liefermenge abhängt,
b) bei dem von den Anbietern die ihrer Kalkulation zugrundeliegenden logistischen Preikomponenten in einer Datenbank eines Computers eingegeben werden,
c) bei dem von den Anbietern die angebotenen aktuellen Grundpreise als Verkaufsdaten in der Datenbank des Computers eingegeben werden,
d) bei dem vom Kaufinteressenten die Kaufdaten Lieferort und gewünschte Menge der Ware als Datenbankanfrage in den Computer eingegeben werden,
e) bei dem mit Hilfe des Computers anhand der Kaufdaten auf der Basis der Verkaufsdaten für jeden Anbieter unter Zugrundelegung seiner eigenen logistischen Preikomponenten und der aktuellen Grundpreise sein günstigste Angebot ermittelt wird,
f) bei dem mit Hilfe des Computers dem Kaufinteressenten der mindestens eine Anbieter mit dem günstigsten Angebot angegeben wird,
g) bei dem mit Hilfe des Computers vom Kaufinteressenten ein Anbieter ausgewählt wird und Identifikationsdaten eingegeben werden und
h) bei dem mit Hilfe des Computers eine Kaufanfrage anhand der eingegebenen Daten erstellt und dem ausgewählten Anbieter übermittelt wird.

Dieses Verfahren löst das technische Problem, daß die zuvor aufgezeigten Probleme sowohl auf der Seite des Kaufinteressenten als auch auf der Seite des Anbieters des computergestützten Verfahrens liegen.

## Beschreibung

Die Erfindung betrifft ein Verfahren zur computergestützten Vermittlung einer Kaufanfrage eines Kaufinteressenten an einen Anbieter, insbesondere in Bezug auf Heizöl und/oder Schmiermittel, ein EDV-System zur Vermittlung einer Kaufanfrage eines Kaufinteressenten an einen Anbieter zur Verwirklichung des erfindungsgemäßen Verfahrens sowie ein Computer-Programm zur Vermittlung einer Kaufanfrage eines Kaufinteressenten an einen Anbieter mit Programmbefehlen für ein EDV-System zur Verwirklichung des erfindungsgemäßen Verfahrens.

Im folgenden wird der Stand der Technik und die Erfindung anhand des Beispiels einer Kaufanfrage dargestellt, die auf den Kauf von Heizöl bezogen ist. Es wird jedoch hervorgehoben, daß die vorliegende Erfindung nicht auf die Ware Heizöl beschränkt ist, sondern für jegliche angebotenen Waren gilt, deren Verkaufspreis von der Liefermenge und von der Entfernung zwischen der Lieferbasis und dem Lieferort abhängt.

Bisher ist jeder Heizölkäufer gezwungen, eine Mehrzahl von Anbietern zu kontaktieren, um das billigste Angebot für seine Region herauszufinden. Da zudem die Grundpreise tagesweise schwanken, ist ein ständiges Wiederholen der Ermittlung des billigsten Anbieters erforderlich.

In den bisher bekannten Computernetzen, insbesondere im Internet, werden Verfahren zur computergestützten Vermittlung einer Kaufanfrage eines Kaufinteressenten an einen Anbieter offenbart, bei denen nach Eingabe von Kaufdaten durch den Kaufinteressenten eine Suchmaschine (Metacrawler) in Gang gesetzt wird, die die aktuellen Verkaufsdaten auf den Computern der einzelnen in Frage kommenden Anbieter ermittelt. Diese Vorgehensweise ist zum einen sehr zeitaufwendig, da für ein gut funktionierendes Preisvergleichs-System eine Vielzahl von Anbietern abgefragt werden müssen, wodurch für den Kaufinteressenten unverhältnismäßig hohe Wartezeiten bis zur Übermittlung des günstigsten Angebotes entstehen. Zudem müssen die Anbieter der Suchmaschine (Metacrawler) es ermöglichen, auf den eigenen Computer zugreifen zu können, was aus Gründen der Datensicherheit oftmals abgelehnt wird.

Darüber hinaus besteht im Stand der Technik die Möglichkeit, daß eine Bedienperson regelmäßig sämtliche Anbieter von beispielsweise Heizöl abtelefoniert und die Informationen in der Datenbank des Computers hinterlegt. Da gerade durch die Nutzung des Internets große regionale Bereiche durch das Verfahren zur computergestützten Vermittlung einer Kaufanfrage abgedeckt werden sollen, besteht allein bereits das organisatorische Problem, daß eine große Anzahl von Heizölanbietern kontaktiert werden muß. Daher ist dieses Verfahren für den Anbieter des Vermittlungsverfahrens sehr aufwendig, insbesondere personalaufwendig.

Der Erfindung liegt daher das technische Problem zugrunde, ein Verfahren zur computergestützten Vermittlung einer Kaufanfrage eines Kaufinteressenten an einen Anbieter anzugeben, das die zuvor aufgezeigten Probleme sowohl auf der Seite des Kaufinteressenten als auch auf der Seite des Anbieters des computergestützten Verfahrens löst.

Das zuvor aufgezeigte technische Problem wird erfindungsgemäß durch ein Verfahren zur computergestützten Vermittlung einer Kaufanfrage eines Kaufinteressenten an einen Anbieter gemäß Anspruch 1 gelöst,
a) bei dem von einer Mehrzahl von Anbietern eine Ware angeboten wird, deren Preis von der Entfernung zwischen der Lieferbasis und dem Lieferort und von der Liefermenge abhängt,
b) bei dem von den Anbietern die ihrer Kalkulation zugrundeliegenden logistischen Preikomponenten in einer Datenbank eines Computers eingegeben werden,
c) bei dem von den Anbietern die angebotenen aktuellen Grundpreise als Verkaufsdaten in der Datenbank des Computers eingegeben werden,
d) bei dem vom Kaufinteressenten die Kaufdaten Lieferort und gewünschte Menge der Ware als Datenbankanfrage in den Computer eingegeben werden,
e) bei dem mit Hilfe des Computers anhand der Kaufdaten auf der Basis der Verkaufsdaten für jeden Anbieter unter Zugrundelegung seiner eigenen logistischen Preikomponenten und der aktuellen Grundpreise sein günstigste Angebot ermittelt wird,
f) bei dem mit Hilfe des Computers dem Kaufinteressenten der mindestens eine Anbieter mit dem günstigsten Angebot angegeben wird,
g) bei dem mit Hilfe des Computers vom Kaufinteressenten ein Anbieter ausgewählt wird und Identifikationsdaten eingegeben werden und
h) bei dem mit Hilfe des Computers eine Kaufanfrage anhand der eingegebenen Daten erstellt und dem ausgewählten Anbieter übermittelt wird.

Mit Hilfe des erfindungsgemäßen computergestützten Verfahrens können beliebig viele Anbieter der Ware, bspw. von Heizöl, eine neutrale Plattform in Form der Datenbank nutzen, um mit Hilfe eines zentralen Computers ihre Preiskalkulationen einem objektiven Preisvergleich zuzuführen. Von den Anbietern werden die ihrer Kalkulation zugrundeliegenden logistischen Preikomponenten in einer Datenbank eines Computers eingegeben, die in der Regel über längere Zeitdauern unverändert bleiben. Sie geben dann jeweils tagesaktuell ihre Grundpreise selber in die Datenbank ein, wodurch die Datenpflege in der Datenbank an sich vom Aufwand her vereinfacht und zudem auf eine Vielzahl von Eingabestellen verteilt wird. Dabei ist es von Vorteil, daß die Anbieter selbst ihre Grundpreise eingeben, wodurch ein aufwendiges Abfragen von Seiten Dritter vermieden wird.

Anbieter können weiterhin Frachtaufschläge, die einem Basispreis in Abhängigkeit von der Entfernung zwischen der Lieferbasis und dem Lieferort aufgeschlagen werden, beliebig eingeben. Der Begriff Lieferbasis ist dabei so zu verstehen, daß die Ware, beispielsweise Heizöl, nicht beim Anbieter gelagert wird und vorrätig ist, sondern für eine oder mehrere unterschiedliche Lieferungen an einer zentralen Abgabestelle, der Lieferbasis, in einer größeren Menge, gegebenenfalls täglich, abgeholt und dann zu verschiedenen Lieferorten gebracht wird.

Ebenso kann die Preisstaffelung für unterschiedliche Liefermengen variabel eingegeben werden. Somit bestehen bereits mit diesen beiden Preiskriterien genügend Möglichkeiten, um sich gegenüber anderen Anbietern hinreichend zu unterscheiden.

Für den Kaufinteressenten ergibt sich beim erfindungsgemäßen computergestützten Verfahren der Vorteil, daß durch eine einmalige Eingabe der Kaufdaten aus dem am Verfahren teilnehmenden Anbietern der zumindest eine Anbieter mit dem günstigsten Angebot ermittelt und angegeben, insbesondere auf der Internetseite angezeigt wird. Der Kaufinteressent kann dann durch Auswahl eines der angezeigten Anbieter und durch Eingeben von Identifikationsdaten wie Name und Adresse eine Nachricht vom Computer erzeugen lassen, die mit Hilfe des erfindungsgemäßen Verfahrens an den ausgewählten Anbieter übermittelt wird. Der so kontaktierte Anbieter kann dann die Kaufanfrage bearbeiten, wobei er zunächst die Kundenbonität prüfen kann, bevor er den Kaufinteressenten erstmals direkt kontaktiert.

Die Vorteile der erfindungsgemäßen Verfahrens lassen sich daher wie folgt zusammenfassen:
- Die Anbieter administrieren ihre Verkaufsdaten selbst.
- Die Anbieter erhalten qualifizierte Anfragen, da der Kunde den Preis bereits verglichen hat.
- Die Heizölanbieter rufen den Kunden nach einer eventuellen Bonitätsprüfung zurück und führen die Kaufanfrage in ihren normalen Organisationsablauf ein.
- Der Kaufinteressent kann ein effizientes Verfahren zum Preisvergleichen nutzen, um einen preiswerten Heizölanbieter zu ermitteln.

Das erfindungsgemäße, zuvor beschriebene Verfahren kann durch die folgenden zusätzlichen Daten erweitert werden, wodurch eine größere Differenzierung der angebotenen Preise erreicht wird.

Insbesondere beim Kauf von Heizöl ist es üblich, daß sich mehrere Kaufinteressenten zusammenschließen, um eine größere Menge an Heizöl mit einem damit verbundenen geringeren Preis aufgrund der Preisstaffelung zu bestellen. Da jedoch das eingekaufte Heizöl an verschiedenen Lieferstellen in Teilmengen abgeladen werden muß, ergibt sich für den Heizölanbieter ein größerer Aufwand. Daher ist es üblich, Preisaufschläge für die Anzahl von Lieferstellen größer als eins zu verlangen. In bevorzugter Weise können nun bei dem erfindungsgemäßen Verfahren die Anbieter unterschiedliche Preisaufschläge für die Anzahl von Lieferstellen in der Datenbank eingeben. Der Kaufinteressent gibt dann die Anzahl der Lieferstellen ein und die Preisermittlung berücksichtigt die Anzahl der Lieferstellen zur Ermittlung des günstigsten Angebotes.

Da insbesondere beim Heizöl tagesaktuelle Preise verlangt werden, sind die angebotenen Preise in der Regel für jeweils einen Tag und beispielsweise für drei Tage im Voraus bekannt. Daher können in weiter bevorzugter Weise beim erfindungsgemäßen Verfahren die Preise nach dem Lieferdatum unterschieden werden und entsprechend von den Anbietern eingegeben werden. Der Kaufinteressent gibt dann das gewünschte Lieferdatum ein und die Preisermittlung wird auch unter Berücksichtigung des Lieferdatums durchgeführt.

Schließlich können die Preise auch nach unterschiedlichen Warenqualitäten unterschieden werden. Daher können in weiter bevorzugter Weise die Anbieter die Preise gestaffelt nach unterschiedlichen Warenqualitäten eingeben und der Kaufinteressent gibt die von ihm gewünschte Warenqualität ein, wonach auf der Basis auch dieser Angabe die Preisermittlung vom Computer durchgeführt wird.

In weiter bevorzugter Weise wird das erfindungsgemäße Verfahren zur computergestützten Vermittlung von Kaufanfragen so durchgeführt, daß von den Anbietern der jeweilige örtliche Lieferbereich eingegeben wird und vor einer Preisermittlung die Anbieter ermittelt werden, in deren Lieferbereich der vom Kaufinteressenten angegebene Lieferort liegt. Damit wird ausgeschlossen, daß unsinnige Entfernungen zwischen dem gewünschten Lieferort und dem Anbieter auftreten, die vom Anbieter gar nicht akzeptiert werden können. Dadurch wird wirkungsvoll vermieden, daß das erfindungsgemäße computergestützte Verfahren eine unrealistische Kaufanfrage erzeugt.

Für eine weitere Ausgestaltung des erfindungsgemäßen computergestützten Verfahrens wird als Kriterium des Lieferortes jeweils die Postleitzahl verwendet, die eine genügend genaue Spezifizierung der Entfernung zwischen der Lieferbasis und dem Lieferort für eine Staffelung der Frachtaufschläge darstellt. Zudem wird für eine Suchanfrage durch den Kaufinteressenten weitgehend Anonymität gewahrt.

Weiterhin ist bei dem beschriebenen Verfahren zur computergestützten Vermittlung einer Kaufanfrage bevorzugt, daß nach der Ermittlung der günstigsten Angebote dem Kaufinteressenten eine Rangliste mehrerer der günstigsten Angebote angegeben, insbesondere auf der Internetseite angezeigt wird. Der Kaufinteressent wählt dann aus der Rangliste einen Anbieter aus, an den mit Hilfe des Computers eine Kaufanfrage übermittelt werden soll. Somit hat der Kaufinteressent die Möglichkeit, nicht nur das günstigste Angebot eines ihm gegebenenfalls nicht zusagenden Anbieters, sondern ein geringfügig teureres Angebot eines von ihm bevorzugten Anbieters auszuwählen.

Schließlich ist es bevorzugt, nach dem Stellen einer Kaufanfrage anhand der eingegebenen Daten nicht nur dem ausgewählten Anbieter die Kaufanfrage zu übermitteln, sondern dem Kaufinteressenten eine im wesentlichen inhaltsgleiche Bestätigungsnachricht für das Übermitteln der Kauf anfrage zuzusenden. Damit erhält der Kaufinteressent die für ihn wichtige Rückkopplung, daß die Kaufanfrage tatsächlich abgesandt wurde und daß er somit auf eine Kontaktaufnahme durch den Anbieter warten kann.

Das oben aufgezeigte technische Problem wird gemäß einer weiteren Lehre durch ein EDV-System zur Vermittlung einer Kaufanfrage eines Kaufinteressenten an einen Anbieter zur Verwirklichung eines der oben beschriebenen Verfahren gelöst.

Ebenso wird das technische Problem durch ein Computer-Programm zur Vermittlung einer Kaufanfrage eines Kaufinteressenten an einen Anbieter mit Programmbefehlen für ein EDV-System zur Verwirklichung eines der zuvor beschriebenen Verfahren gelöst.

Im folgenden wird die Erfindung anhand eines Ausführungsbeispieles des erfindungsgemäßen Verfahrens erläutert, wozu auf die beigefügte Zeichnung bezug genommen wird. In der Zeichnung zeigen
- Fig. 1: den Ablauf eines Ausführungsbeispiels des erfindungsgemäßen Verfahrens in einem Blockdiagramm und
- Fig. 2: die Ermittlung der Ergebnisse gemäße Fig. 1 in einer detaillierten Schrittabfolge in einem Blockdiagramm.

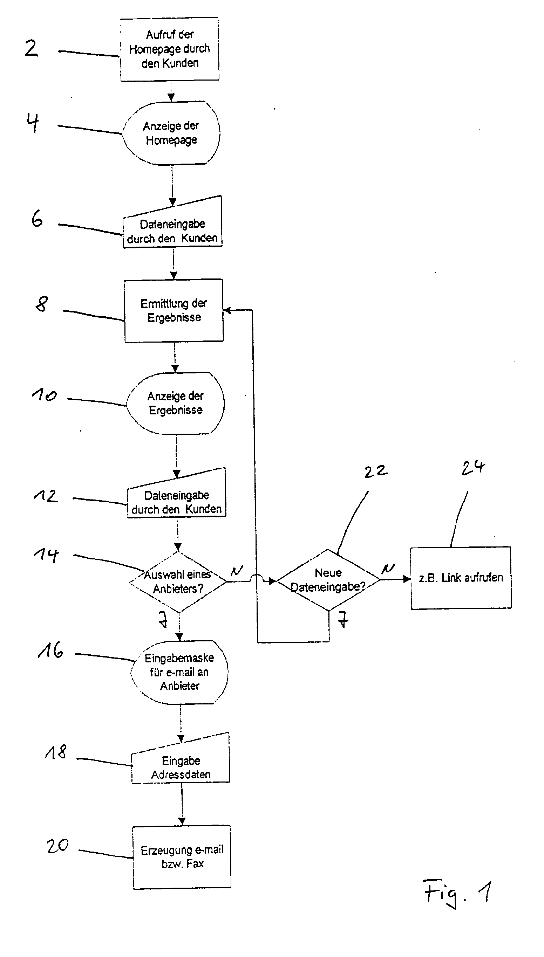

Ein Ausführungsbeispiel des erfindungsgemäßen Verfahrens wird in Fig. 1 anhand eines Blockdiagramms dargestellt. Im Schritt 2 ruft der Kaufinteressent, bzw. der Kunde die Internetseite auf, unter der ein Computer-Programm zur Vermittlung einer Kaufanfrage eines Kaufinteressenten an einen Anbieter mit Programmbefehlen für eine EDV-System aktiviert werden kann, mit dem das nachfolgend beschriebenen Verfahren verwirklicht wird. Im Schritt 4 wird die Internetseite (Homepage) angezeigt, in der im Schritt 6 der Kunde die Kaufdaten eingibt.

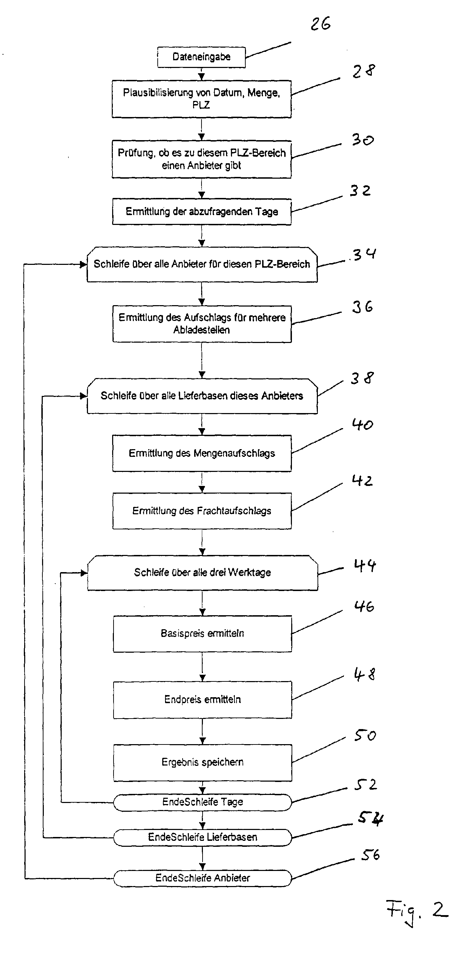

Im Schritt 8 werden die Ergebnisse ermittelt, also die preisgünstigsten Angebote der Anbieter, die ihre Verkaufsdaten in der dem Computer-Programm zugrunde liegenden Datenbank eingegeben haben. Die Vorgehensweise bei der Ermittlung der Ergebnisse wird weiter unten im Detail anhand der Fig. 2 dargestellt.

Im Schritt 10 in Fig. 1 werden die Ergebnisse angezeigt und durch eine weitere Dateneingabe durch den Kunden im Schritt 12 wird der Ablauf des Programmes weiter beeinflußt. Im Entscheidungsschritt 14 wird festgestellt, ob ein Anbieter vom Kunden durch dessen Dateneingabe im Schritt 12 ausgewählt worden ist. Ist dieses der Fall, so wird im Schritt 16 eine Eingabemaske auf der Internetseite dargestellt, mit der eine elektronische Nachricht (Email) an den ausgewählten Anbieter erstellt werden kann. Dazu werden im Schritt 18 die Identifikationsdaten, also der Name und insbesondere die Adreßdaten vom Kunden eingegeben. Anschließend wird im Schritt 20 eine elektronische Nachricht erzeugt, die gegebenenfalls auch als Fax gesendet werden kann.

Wird im Entscheidungsschritt 14 festgestellt, daß durch die Dateneingabe des Kunden kein Anbieter ausgewählt worden ist, so wird im Entscheidungsschritt 22 festgestellt, ob der Kunde eine neue Dateneingabe durchgeführt hat. Ist dieses der Fall, so wird das Verfahren weiter mit Schritt 8, also der Ermittlung der Ergebnisse anhand der neuen eingegebenen Daten durchgeführt. Hat dagegen der Kunde keine neue Dateneingabe durchgeführt, so wird im Schritt 24 eine andere Aktion, beispielsweise eine andere Internetseite (Link) aufgerufen und das erfindungsgemäße Verfahren somit beendet.

Fig. 2 zeigt einen detaillierte Ablauf der Ermittlung der Ergebnisse gemäß Schritt 8 des in Fig. 1 dargestellten Verfahrensablaufes.

Im Schritt 26 werden die Kaufdaten vom Kaufinteressenten eingegeben. Dieser umfassen das Lieferdatum, die Liefermenge und die Postleitzahl zur Charakterisierung des Lieferortes. Diese werden im Schritt 28 auf Plausibilität überprüft, um zu verhindern, daß eine weitere Durchführung des Verfahrens mit nicht plausiblen Daten erfolgt.

Im Schritt 30 wird überprüft, ob zu der vom Kaufinteressenten angegebenen Postleitzahl ein Anbieter in der Datenbank Verkaufsdaten eingegeben hat. Danach werden im Schritt 32 die drei Werktage ermittelt, die dem vom Kaufinteressenten eingegeben Lieferdatum zugeordnet sind, siehe Schritt 26. Dazu wird festgestellt, welche der Tage, das Lieferdatum eingeschlossen, Werktage sind. Die Preisermittlung findet dann für alle drei Werktage statt.

Das folgende Verfahren umfaßt insgesamt drei Schleifen, die jeweils ein- oder mehrfach durchlaufen werden.

Eine erste Schleife erstreckt sich über die Verfahrensschritte 34 bis 56, wobei es sich um eine Schleife über alle ermittelten Anbieter für den Postleitzahl-Bereich handelt, die zu der vom Kaufinteressenten im Schritt 26 eingegebenen Postleitzahl gehören. Zunächst wird im Schritt 36 ermittelt, ob der Kaufinteressent eine Anzahl von mehr als einer Abladestelle im Schritt 26 eingegeben hat. Ist dieses der Fall, so wird der Aufschlag für den aktuell in der Schleife 34 bis 56 analysierten Anbieters berechnet.

Nachfolgend beginnt eine zweite Schleife, die über alle Lieferbasen des aktuellen Anbieters geht und sich vom Schritt 38 bis zum Schritt 54 erstreckt. Für jede Lieferbasis des aktuellen Anbieters wird im Schritt 40 der Mengenaufschlag sowie im Schritt 42 der Frachtaufschlag aufgrund der Entfernung zwischen der Lieferbasis und dem Lieferort ermittelt.

Danach beginnt die dritte Schleife, die die Ergebnisse für sämtliche drei Werktage berechnet und sich über die Schritte 44 bis 52 erstreckt. In dieser Schleife wird zunächst im Schritt 46 der Basispreis, der auch als exLagerpreis bezeichnet wird, errechnet, auf dem im Schritt 48 die zuvor in den Schritten 36, 40 und 42 ermittelten Aufschläge sowie möglicherweise zu berücksichtigende Steuern aufaddiert werden. Im Schritt 50 wird das somit ermittelte Einzelergebnis gespeichert, wonach das Ende der dritten Schleife erreicht wird. Sind sämtliche Schleifenbedingungen der dritten Schleife der Schritte 44 bis 52 abgearbeitet worden, so wird die zweite Schleife im Schritt 54 beendet. Sind auch alle Schleifenbedingungen der zweiten Schleife der Schritte 38 bis 54 erfüllt, wird das Ende der ersten Schleife im Schritt 56 erreicht. Sind schließlich auch alle Anbieter für den gegebenen Postleitzahlbereich der ersten Schleife erreicht, so liegen sämtliche ermittelten Ergebnisse vor, wonach die günstigsten Angebote ermittelt und dem Kaufinteressenten übermittelt bzw. auf der Internetseite angezeigt werden können.

Die in den Figuren 1 und 2 dargestellten Verfahrensabläufe beziehen sich auf die Abfrage durch einen Kaufinteressenten. Die dabei verwendeten Verkaufsdaten der Anbieter müssen zuvor in der Datenbank eingegeben worden sein. Diese Vorgehensweise ist jedoch nicht im Detail dargestellt, da es sich um eine einfache Eingaberoutine handelt.

## Patentansprüche

1. Verfahren zur computergestützten Vermittlung einer Kaufanfrage eines Kaufinteressenten an einen Anbieter,
a) bei dem von einer Mehrzahl von Anbietern eine Ware angeboten wird, deren Preis von der Entfernung zwischen der Lieferbasis und dem Lieferort und von der Liefermenge abhängt,
b) bei dem von den Anbietern die ihrer Kalkulation zugrundeliegenden logistischen Preikomponenten in einer Datenbank eines Computers eingegeben werden,
c) bei dem von den Anbietern die angebotenen aktuellen Grundpreise als Verkaufsdaten in der Datenbank des Computers eingegeben werden,
d) bei dem vom Kaufinteressenten die Kaufdaten Lieferort und gewünschte Menge der Ware als Datenbankanfrage in den Computer eingegeben werden,
e) bei dem mit Hilfe des Computers anhand der Kaufdaten auf der Basis der Verkaufsdaten für jeden Anbieter unter Zugrundelegung seiner eigenen logistischen Preikomponenten und der aktuellen Grundpreise sein günstigste Angebot ermittelt wird,
f) bei dem mit Hilfe des Computers dem Kaufinteressenten der mindestens eine Anbieter mit dem günstigsten Angebot angegeben wird,
g) bei dem mit Hilfe des Computers vom Kaufinteressenten ein Anbieter ausgewählt wird und Identifikationsdaten eingegeben werden und
h) bei dem mit Hilfe des Computers eine Kaufanfrage anhand der eingegebenen Daten erstellt und dem ausgewählten Anbieter übermittelt wird.

2. Verfahren nach Anspruch 1, bei dem von den Anbietern und dem Kaufinteressenten die Daten über ein Computernetz, insbesondere das Internet, auf den Computer übertragen werden.

3. Verfahren nach Anspruch 1 oder 2, bei dem im Schritt b) von den Anbietern die Basispreise für jede Lieferbasis und die Frachtaufschläge in Abhängigkeit von der Entfernung zwischen der Lieferbasis und dem Lieferort eingegeben werden.

4. Verfahren nach einem der Ansprüche 1 bis 3, bei dem im Schritt c) von den Anbietern Preisaufschläge für die Anzahl von Lieferstellen größer als eins eingegeben werden, bei dem im Schritt d) vom Kaufinteressenten die Anzahl der Lieferstellen eingegeben wird und bei dem im Schritt e) bei der Preisermittlung die Anzahl der Lieferstellen berücksichtigt wird.

5. Verfahren nach einem der Ansprüche 1 bis 4, bei dem im Schritt c) die Preise nach dem Lieferdatum unterschieden werden, bei dem im Schritt d) vom Kaufinteressenten das Lieferdatum eingegeben wird und bei dem im Schritt e) bei der Preisermittlung das Lieferdatum berücksichtigt wird.

6. Verfahren nach einem der Ansprüche 1 bis 5, bei dem in dem Schritt c) die Preise nach unterschiedlichen Warenqualitäten unterschieden werden, bei dem in Schritt d) vom Kaufinteressenten die Warenqualität angegeben wird und bei dem im Schritt e) bei der Preisermittlung die Warenqualität berücksichtigt wird.

7. Verfahren nach einem der Ansprüche 1 bis 6, bei dem im Schritt c) von den Anbietern der örtliche Lieferbereich eingegeben wird, bei dem im Schritt e) zunächst die Anbieter ermittelt werden, in deren Lieferbereich der im Schnitt d) vom Kaufinteressenten angegebenen Lieferort liegt, und bei dem für diese Auswahl von Anbietern die Preisermittlung durchgeführt wird.

8. Verfahren nach einem der Ansprüche 1 bis 7, bei dem als Kriterium des Lieferortes die Postleitzahl verwendet wird.

9. Verfahren nach einem der Ansprüche 1 bis 8, bei dem im Schritt f) eine Rangliste mehrerer der günstigsten Angebote angegeben wird und bei dem im Schritt g) vom Kaufinteressenten ein Anbieter aus der Rangliste ausgewählt wird.

10. Verfahren nach einem der Ansprüche 1 bis 9, bei dem im Schritt h) dem Kaufinteressenten eine Bestätigungsnachricht für das Übermitteln der Kaufanfrage an den Anbieter zugesandt wird.

11. Anwendung eines Verfahrens nach einem der Ansprüche 1 bis 10 für die Vermittlung von Kaufanfragen in Bezug auf Heizöl und/oder Schmiermittel.

12. EDV-System zur Vermittlung einer Kaufanfrage eines Kaufinteressenten an einen Anbieter zur Verwirklichung eines Verfahrens nach einem der Ansprüche 1 bis 11.

13. Computer-Programm zur Vermittlung einer Kaufanfrage eines Kaufinteressenten an einen Anbieter mit Programmbefehlen für ein EDV-System zur Verwirklichung eines Verfahrens nach einem der Ansprüche 1 bis 11.

14. Computer-Programm nach Anspruch 13, gespeichert auf einem maschinenlesbaren Medium.
